# FASCICULE DE BREVET EUROPEEN

(11) **EP 0 409 774 B1**
(45) Date de publication et mention de la délivrance du brevet: **14.12.1994**
(21) Numéro de dépôt: 90810516.6
(22) Date de dépôt: 06.07.1990
(51) Int. Cl.: C04B 28/02, C04B 40/00

(54) **Composition retardatrice de prise pour liants hydrauliques, et procédé de sa préparation**
Abbindungsverzögernde Zusammensetzung für hydraulische Bindemittel und Verfahren zu ihrer Herstellung
Set retarding composition for hydraulic binders and process for its preparation

(30) Priorité: 17.07.1989 CH 2669/89
(43) Date de publication de la demande: 23.01.1991
(73) Titulaire: Atdjian, Jean-Paul, F-06000 Nice (FR)
(72) Inventeur: Atdjian, Jean-Paul, F-06000 Nice (FR)
(74) Mandataire: Seehof, Michel

(56) Documents cités:
- BE-A- 680 738
- DE-C- 722 094
- FR-A- 1 543 999
- FR-A- 1 575 054
- US-A- 2 516 342
- US-A- 3 307 588
- US-A- 3 372 040
- US-A- 4 036 659

## Description

La présente invention appartient au domaine technique de la construction. Elle concerne plus précisément une composition retardatrice de prise pour liants hydrauliques tels que ciment pouzzolanique, ciment de haut fourneau, ciments Portland, ciment de laitier etc., comprenant au moins un retardeur-fluidifiant choisi parmi les lignosulfonates et les polyphosphates et au moins un retardeur-épaississant. L'invention concerne également un procédé de préparation de la composition mentionnée.

Tous les liants hydrauliques tels que ceux mentionnés ci-dessous et analogues ont des temps de prise de deux à quatre heures. Ce temps peut être trop court pour de nombreuses applications, telles que celles concernant les bétons transportés par dumper, les bétons coulés sous l'eau ou dans des puits, les bétons, coulis et mortiers injectés.

De nos jours, un dumper peut être pris dans un embouteillage de route ce qui rend le temps jusqu'à l'utilisation encore plus long.

De plus, par temps chaud, la prise est raccourcie. Elle est alors trop courte pour la plupart des applications.

Dans le passé, de nombreux produits ont été proposés comme retardateurs de prise. Cependant, aucun ne donne entièrement satisfaction car ces produits ne sont généralement pas assez actifs; ils ne conviennent pas avec tous les ciments, par exemple, la chaux retarde la prise du Portland et accélère celle du laitier; ils deviennent accélérateurs à certains dosages, rendant très dangereuse toute erreur de dosage; ils modifient profondément l'équilibre rhéologique du béton, qui est fonction des trois facteurs: viscosité, rigidité, angle de frottement interne.

La plupart des retardateurs diminuent l'une de ces valeurs, sans modifier les deux autres, en rompant ainsi l'équilibre du système.

La présente invention a pour objet une composition retardatrice de prise pour liants hydrauliques, tendant à obvier aux inconvénients précités.

Le brevet suisse no 502 963 décrit une composition retardatrice pour ciments, chaux hydrauliques et autres liants hydrauliques, comprenant en association au moins un retardateur-fluidifiant choisi parmi les sucres, les lignosulfates, les tanins, les polyphosphates et les chlorates; et au moins un retardateur-épaississant choisi parmi les colloides organiques et les poudres colloïdes minérales.

L'enseignement de ce brevet suisse est identique à celle du FR-A-1 543 999.

Ces compositions connues semblent bien remplir leur but, à savoir de prolonger le temps de prise d'un nombre de liants hydrauliques. Cependant, on a constaté un changement dimensionnelle important du ciment et des mortiers au cours du durcissement, spécialement un gonflement réduit sous l'eau lorsqu'on ajoute cette composition, même aux faibles quantités, inférieures à 1 % au poids. Dans certains cas (ciment Portland), il y a au contraire une augmentation du gonflement par rapport à la pâte pure sans additif. De toute façon, ce changement du taux de gonflement est important et imprévisible ce qui rend l'utilisation d'un mortier ou béton coulé très difficile car le gonflement final est pris en considération lorsqu'on construit le moule ou calcule et prépare le coffrage.

Le but de la présente invention est de supprimer ces inconvénients et de mettre à disposition une composition permettant de contrôler le gonflement et de prolonger le temps de prise.

Ce but est atteint par la composition de l'invention qui est définie dans la première revendication indépendante. Un procédé pour préparer la composition fait l'objet de la seconde revendication indépendante. Les modes de réalisation particuliers sont définis dans les revendications dépendantes.

Le US-A-4 036 659 a trait à une composition de ciment à base de ciment Portland et d'hémihydrate de sulfate de calcium et contient au moins un retardateur de prise comprenant un sel soluble d'acide lignosulfonique, un acide hydroxypolycarboxylique à bas poids moléculaire ou un de ses sels, et/ou un hexamétaphosphate alcalin. Ces substances, en tout entre 0,1 et 2 % par rapport à la composition de ciment, sont simplement globalement ajoutées au ciment tandis que l'invention prévoit une composition sous forme d'additif contenant elle-même une charge minérale spéciale.

Dans la composition selon l'invention, on considère les lignosulfonates et les polyphosphates comme étant des retardeurs-fluidifiants, et la charge minérale comme retardeur-épaississant. Cependant, la présente composition se distingue par une pluralité de caractères des compositions connues, en particulier celle du brevet suisse no 502 963:
(1) La présente composition contient en plus un agent tensio-actif, absent de la composition connue. Il a été trouvé que cet agent, de par son action de mouillage, assure non seulement une parfaite homogénéité de la composition mais aussi une parfaite et rapide répartition et distribution dans les liants hydrauliques en question. On pense que la plus grande efficacité de la présente composition est au moins en partie due à la présence de l'agent tensio-actif.
   L'agent tensio-actif peut être choisi parmi les substances bien connues qui appartiennent à l'une des classes des tensides, à savoir anioniques, cationiques, zwitterioniques ou non-ioniques. On en citera quelques exemples: savons et résinates, sulfates d'acides gras comme substances anioniques, sels d'ammonium quaternaires et acylalkylolamines comme substances cationiques; alkylarylpolyglycoléthers comme substances non-ioniques; et sulfobétaïnes comme substances ampholytiques (ou zwitterioniques). Dans la présente invention, on préfère les agents tensio-actifs non-ioniques.
(2) La composition ne contient pas de liant ou similaire, ayant une action épaississante et présent dans tous les exemples du brevet suisse no 502 963, à savoir le carboxyméthylcellulose, l'amidon, l'alginate de sodium. La présente invention vise à supprimer l'ajout de toute substance organique (hormis la très faible quantité d'agent tensio-actif naturellement).
(3) L'invention évite en plus la présence de poudres colloïdales minérales. En effet, la grosseur des particules colloïdes est comprise selon les revues techniques, entre 10⁻⁵ et 10⁻⁷ cm, à savoir entre 0,1 et 0,001 microns. Il a été trouvé que les minéraux utilisés dans la composition selon l'invention, qui ne sont d'ailleurs pas mentionnés dans les brevets cités, devraient de préférence avoir une granulométrie inférieure à 50 microns, pour au moins 80 % de la charge. Ces matières ne sont pas des colloïdes. Par contre, l'action des colloïdes minérales ne semble pas avoir d'effet retardateur prononcé.
(4) On a encore trouvé que le mode de préparation de la composition peut être important pour obtenir les meilleurs résultats. Tandis que selon le brevet suisse no 502 963 un simple mélange des composants est effectué, la présente invention met à disposition un procédé spécial de préparation de la composition selon l'invention. Ce procédé comprend le broyage et mélange simultanés de la charge minérale avec l'agent tensio-actif jusqu'à ce que 80 % au moins de la charge aient une grosseur inférieure à 50 microns, de préférence 30 microns et supérieure à 10 microns. Ensuite, et tout en continuant l'opération de broyage et de mélange, on ajoute le lignosulfonate et/ou le polyphosphate, et on continue de mélanger jusqu'à l'obtention du mélange intime visé.

Ce mode de préparation fournit une composition dont l'effet retardateur est augmenté de 10 à 15 % par rapport à une composition correspondante à dosage identique mais qui ne constitue qu'un mélange simple de ses composants, ou bien, en d'autres termes, on peut diminuer la quantité de la composition requise par un retard de prise donné, de 10 à 15 %. Ceci est particulièrement important, car tout ajout au système complexe d'un béton ou mortier a de l'influence sur l'équilibre de ces derniers, souvent désavantageuse.

Au cours du procédé de l'invention, on peut ajouter autant d'eau qu'il est nécessaire pour rendre la composition finale granuleuse, mais l'ajout d'eau ne doit pas dépasser le point où le mélange perd sa propriété de libre écoulement. L'addition d'eau facilite le broyage et supprime toute poussière pendant et après broyage.

Une composition granuleuse encore plus facile à doser.

Comme charge, on utilise le vermiculite, le bentonite, le montmorillonite et/ou le perlite. Ces substances minérales ont la propriété d'absorber de l'eau et de gonfler. La nature de leur action pour retarder la prise d'un béton n'est pas connue avec certitude.

La concentration des composants dans la composition de l'invention peut varier dans de larges limites. En général, elle est comprise entre 0,5 et 2 parties de la charge minérale et 0,05 à 0,5 partie de l'agent tensio-actif pour 1 partie de lignosulfonate et/ou de polyphosphate. Ces parties sont des parties en poids. On ne peut pas donner de règle générale en ce qui concerne la quantité d'eau car elle dépend largement de la charge utilisée.

Les exemples qui suivent illustrent l'invention mais ils ne la limitent pas.

### Exemple 1

On place dans un broyeur à boulets 100 g de perlite et l'on ajoute 12,5 g d'un nonylphénylpolyglycoléther (20 moles d'oxyde d'éthylène). On fait tourner le broyeur pendant 40 minutes. L'analyse granulométrique montre que 90 % des particules ont un diamètre inférieur à 50 microns, et 82 % un diamètre supérieur à 5 microns.

On ajoute dans le broyeur 125 g de tripolyphosphate de sodium dispersé dans 100 ml d'eau. On fait tourner le broyeur encore 20 minutes, et l'on obtient, après la séparation des boulets, une composition s'écoulant librement comprenant des granules moues d'un diamètre d'environ 2 à 3 mm.

### Exemple 2

On répète l'exemple 1 mais on remplace les 125 g de tripolyphosphate de sodium par un mélange de 60 g de lignosulfonate de sodium et 65 g de pyrophosphate de sodium. La composition obtenue présente les mêmes propriétés physiques.

### Exemple 3

On prépare dans une bétonneuse un béton composé de 100 kg de ciment de Portland par m3, de 135 litres de sable et de 250 litres de graviers. A la fin de l'opération de gâchage, on ajoute 0,1 % et 0,2 % en poids, respectivement, des compositions selon les exemples 1 et 2. On suit le procédé de durcissement en mesurant des propriétés physiques. Ces résultats sont donnés dans le tableau.

**Tableau**

| Effet retardateur de la composition | | | | | |
|---|---|---|---|---|---|
| Nature du ciment | % en poids de la composition | Gonflement sous l'eau | | Prise | |
| | | 3 jours | 14 jours | début (h) | fin (h) |
| Portland | 0 | + 140 | + 140 | 4 | 14 |
| | 0,1 | + 135 | + 140 | 8 | 20 |
| | 0,2 | + 130 | + 145 | 10 | 24 |
| | 0,3 *) | + 20 | + 60 | 8 3/4 | 20 |

| | | | | | |
|---|---|---|---|---|---|
| *) comparaison: Exemple 1 selon le brevet suisse no 502 963 | | | | | |

Les avantages de la composition selon l'invention par rapport aux compositions connues sont manifestes.

## Revendications

1. Composition retardatrice de prise pour liants hydrauliques, comprenant au moins un retardateur-fluidifiant choisi parmi les lignosulfonates et les polyphosphates et au moins un retardateur-épaississant, caractérisée en ce qu'elle est constituée d'un mélange intime contenant
a) un lignosulfonate et/ou un polyphosphate hydrosolubles,
b) une charge minérale finement divisée, choisie parmi le vermiculite, le bentonite, le montmorillonite et le perlite, à titre de retardateur-épaississant, et
c) un agent tensio-actif.

2. Composition selon la revendication 1, caractérisée en ce qu'elle contient en plus de l'eau en quantité telle que la composition prenne une forme granuleuse.

3. Composition selon la revendication 1, caractérisée en ce que les constituants sont présents dans la gamme des rapports pondéraux suivants:
(a) : (b) : (c) = 1 : (0,5 - 2) : (0,05 - 0,5).

4. Composition selon la revendication 1, caractérisée en ce qu'elle est constituée par un mélange intime d'environ
25 parties en poids de tripolyphosphate de sodium,
20 parties en poids de perlite,
2,5 parties en poids d'un nonylphénylpolyglyoléther,
et 20 parties en poids d'eau.

5. Procédé de préparation d'une composition retardatrice de prise selon l'une quelconque des revendications 1 à 4, caractérisé en ce qu'on mélange dans un broyeur-malaxeur d'abord la charge minérale avec l'agent tensioactif, jusqu'à ce que 80 % au moins de la charge ont une grosseur inférieure à 50 microns, et en ce qu'on ajoute le lignosulfonate et/ou le polyphosphate tout en continuant le mélange-broyage.

6. Procédé selon la revendication 5, caractérisé en ce qu'on ajoute autant d'eau au mélange pour obtenir une composition granuleuse mais s'écoutant encore librement tout en ayant l'aspect sec.

7. Procédé selon la revendication 6, caractérisé en ce qu'on disperse le lignosulfonate et/ou le polyphosphate dans de l'eau, et l'on ajoute la solution/dispersion au mélange broyé de tenside et de charge.

8. Utilisation de la composition selon l'une quelconque des revendications 1 à 4 dans un béton ou mortier à raison de 0,1 à 1,0 % en poids par rapport au béton ou mortier.

9. Utilisation selon la revendication 8 à raison de 0,2 à 0,4 % en poids.

## Claims

1. Set retarding composition for hydraulic binders, containing at least one retarding and liquefying agent selected from lignosulfonates and polyphosphates, and at least one retarding and thickening agent, characterised in that the composition is constituted by an intimate mixture containing
a) a water soluble lignosulfonate and/or polyphosphate,
b) a finely divided mineral filler, selected from vermiculite, bentonite, montmorillonite and perlite as a retarding and thickening agent, and
c) a surface active agent.

2. Composition according to claim 1, characterised in that it further contains water in such an amount that the composition takes a granular form.

3. Composition according to claim 1, characterised in that its constituents are contained in the following weight ratio range:
(a) : (b) : (c) = 1 : (0.5 to 2) : (0.05 to 0.5).

4. Composition according to claim 1, characterised in that it is constituted by an intimate mixture of about
25 parts by weight of sodium tripolyphosphate,
20 parts by weight of perlite,
2.5 parts by weight of a nonylphenyl polyglycol ether, and
20 parts by weight of water.

5. Process for the preparation of a set retarding composition according to any one of claims 1 to 4, characterised in that the mineral filler is first mixed in a milling and mixing device with the surface active agent until at least 80 % of the filler has a size below 50 microns, and that the lignosulfonate and/or the polyphosphate is then added under continued mixing and milling.

6. Process according to claim 5, characterised in that water is added to the mixture in such amounts that a granular composition is obtained which is still free-flowing and appears dry.

7. Process according to claim 6, characterised in that the lignosulfonate and/or the polyphosphate is dispersed in water, and the solution/dispersion is added to the milled mixture of surface active agent and filler.

8. Use of the composition according to any one of claims 1 to 4 in a concrete or mortar in amounts of 0.1 to 1.0 % by weight related to the concrete or mortar.

9. Use according to claim 8 in amounts of 0.2 to 0.4 % by weight.

## Patentansprüche

1. Abbindeverzögernde Zusammensetzung für hydraulische Bindemittel, enthaltend mindestens eine Substanz zur Verzögerung und Verflüssigung, ausgewählt aus Lignosulfonaten und Polyphosphaten, sowie mindestens eine Substanz zur Verzögerung und Verdickung, dadurch gekennzeichnet, dass die Zusammensetzung eine innige Mischung ist, welche
a) ein wasserlösliches Lignosulfonat und/oder Polyphosphat,
b) einen mineralischen feinteiligen Füllstoff, ausgewählt aus Vermiculit, Bentonit, Montmorillonit und Perlit als Verzögerer und Verdicker und
c) ein oberflächenaktives Mittel
enthält.

2. Zusammensetzung nach Anspruch 1, dadurch gekennzeichnet, dass sie ausserdem soviel Wasser enthält, dass die Zusammensetzung eine körnige Form annimmt.

3. Zusammensetzung nach Anspruch 1, dadurch gekennzeichnet, dass die Bestandteile in folgenden Gewichtsverhältnissen vorliegen:
(a) : (b) : (c) = 1 : (0,5 - 2) : (0,05 - 0,5).

4. Zusammensetzung nach Anspruch 1, dadurch gekennzeichnet, dass sie aus einer innigen Mischung aus etwa
25 Gewichtsteilen Natriumtripolyphosphat,
20 Gewichtsteilen Perlit
2,5 Gewichtsteilen Nonylphenylpolyglycolether sowie
20 Gewichtsteilen Wasser
zusammengesetzt ist.

5. Verfahren zur Herstellung einer abbindungsverzögernden Zusammensetzung nach einem der Ansprüche 1 bis 4, dadurch gekennzeichnet, dass man in einem Zerkleinerungsmischer zunächst den mineralischen Füllstoff mit dem oberflächenaktiven Mittel vermischt, bis mindestens 80 % des Füllstoffes eine Teilchengrösse unterhalb 50 Micron haben, und dass man dann unter fortgesetztem Mischen und Mahlen das Lignosulfonat und/oder das Polyphosphat zugibt.

6. Verfahren nach Anspruch 5, dadurch gekennzeichnet, dass man dem Gemisch soviel Wasser zugibt, dass eine körnige Zusammensetzung entsteht, die jedoch rieselfahig ist und trocken erscheint.

7. Verfahren nach Anspruch 6, dadurch gekennzeichnet, dass man das Lignosulfonat und/oder das Polyphosphat in Wasser dispergiert und die Lösung bzw. Dispersion dem gemahlenen Gemisch aus oberflächenaktivem Mittel und Füllstoff zugibt.

8. Verwendung der Zusammensetzung nach einem der Ansprüche 1 bis 4 in Beton oder Mörtel in Mengen von 0,1 bis 1,0 Gew.-%, bezogen auf den Beton oder Mörtel.

9. Verwendung nach Anspruch 8 in Mengen von 0,2 bis 0,4 Gew.-%.
